# EUROPEAN PATENT APPLICATION

(11) **EP 0 670 155 A1**
(43) Date of publication of application: **06.09.1995**
(21) Application number: 95200491.9
(22) Date of filing: 28.02.1995
(51) Int. Cl.: A61H 33/02, F16K 15/03

(54) **Valve device for nozzles of hydromassage baths**

(30) Priority: 04.03.1994 IT TV940009 U
(71) Applicant: Jacuzzi Europe Spa, I-33098 Valvasone (Pordenone) (IT)
(72) Inventor: Fornasari, Paolo, I-33084 Cordenons, (Pordenone) (IT); Furlan, Livio, I-33170 Pordenone (IT)
(74) Representative: Michelotti, Giuliano

(57) **Abstract**

In a valve device (12) for the nozzle of hydromassage baths (10) two closing members (28, 30) are arranged in the closed position by means of the action of an extension spring (36) and are designed to assume an open position by means of the pressure of the hydromassage jet.

## Description

The present invention relates to a valve device for nozzles used for hydrosanitary purposes, in particular for the nozzles of hydromassage baths.

It is known that the nozzles for hydromassage baths are provided with an internal duct for supplying a hydromassage jet usually consisting of water mixed with air. Furthermore it is also known of the need to provide suitable nozzle valve devices able to prevent the water contained in the hydromassage bath from entering the nozzle and hence penetrating into the pipes delivering the water and air to the nozzle itself should the water be mixed with detergent or other substances which may have a corrosive action or form deposits.

The valve devices according to the known art are therefore provided with a closing member housed inside the nozzle duct and a resilient element located between the closing member and the duct so as to define, when there is no hydromassage jet flowing through, a first so-called closed position, where the closing member closes the nozzle duct, and a second so-called open position where the closing member allows the jet to flow through.

Usually the closing member has the shape of a truncated cone with the tapered end arranged upstream with reference to the flow of the hydromassage jet and moreover is retained in the closed position, namely when hydromassage is not being performed, by the action exerted by the resilient element in a corresponding frustoconical seat so as to prevent the entry of the bath water into the nozzle pipes via the nozzle itself.

Vice versa, when hydromassage is activated, the pressure exerted by the jet overcomes the resistance offered by the resilient element and thus moves away the frustoconical closing element from its seat, thus allowing the hydromassage jet to flow out.

Such a device, however, has certain drawbacks since the frustoconical closing member constitutes an obstacle for the flow of the hydromassage jet and, moreover, on account of the narrowing of the flow cross-section as well as the deviations which the jet is forced to undergo, contaminating substances and residue of all kinds are deposited and accumulate between the closing member and its seat, creating obvious problems from a hygienic point of view.

This latter problem can be partially resolved by performing regular and frequent cleaning of the valve device. However, this represents an additional task for the user who is required to clean the nozzle periodically.

The aim of the present invention, therefore, is to provide a valve device as a result of which it is possible to overcome the problems mentioned with reference to the cited prior art.

This aim is achieved by a device of the type described initially, characterized in that said at least one closing member is positioned downstream, with reference to the direction of flow of the jet, of the diverging part of the Venturi section provided in the nozzle and is fixed rotatably with respect to the duct, so that in said first closed position it is arranged so as to intercept said flow and in said second open position it is arranged substantially parallel to the said direction of flow.

In a particular application of the invention the cross-section of the nozzle duct is circular and the closing member consists of two halves of essentially semi-circular shape corresponding substantially to half of the cross-section of the duct and fixed rotatably along their diameter in correspondence with a transverse axis of the duct.

Preferably the resilient element is an extension spring having its opposite ends fixed to each closing half-member and being arranged upstream of the closing half-members with reference to the direction of flow of the hydromassage jet; in said first closed position the closing half-members are arranged transversely with respect to the longitudinal axis of the duct, extending on the opposite side with respect to their fixed side, and in said second open position the two closing half-members are arranged along the longitudinal axis of the duct, being located on top of each other and directed downstream with reference to the direction of flow of the hydromassage jet.

It can be easily understood that the flow of the hydromassage jet in the duct, by overcoming the resistance of the extension spring, allows complete opening of the closing half-members so that, compared to that already illustrated with reference to the known art, the resistance offered by these members to the flow of the jet is practically negligible.

These and further advantageous aspects of the invention will emerge more clearly from the following detailed description provided with reference to the accompanying figures which illustrate in diagrammatic form an example of embodiment of thereof. In said figures:
Figure 1 is a longitudinal cross-section of the end part of a nozzle containing a valve device according to the invention shown in the closed position;
Figure 2 is a figure similar to Figure 1 in which the valve device is shown in the open position;
Figure 3 is a view of the same nozzle according to the arrow III in Figure 1.

The Figures partially show a hydromassage nozzle denoted in its entirety by 10, containing a valve device 12 forming the subject of the present invention. The hydromassage nozzle 10 comprises a substantially cylindrical duct 14 for the through-flow of the hydromassage jet, mounted centrally and internally with respect to a spheroidal body 16 free to rotate within predetermined limits about its centre. The rotational movement of the spheroidal body 16 is possible owing to the use of fins 18 integral with the body 20 of the nozzle 10, the free ends 22 of which are able to travel on the external surface of the spheroidal body 16. The body 20 of the nozzle 10 is fixed via means known per se in an opening 24 formed in a wall 26 of the bath (not shown in the figure).

The valve device 12 comprises two closing half-members 28, 30 in the form of a semi-circular segment with dimensions corresponding substantially to half the cross-section of the duct 14, which are rotatably fixed along their respective diameters by means of a pivot not shown and obvious per se, located along a diametral axis 34 of the duct 14.

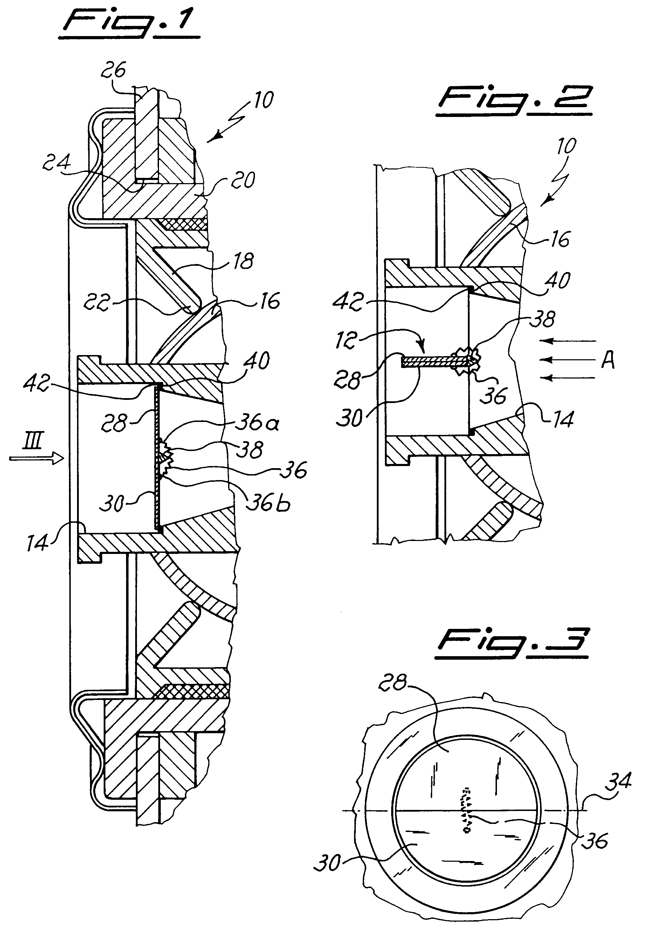

Between the two closing half-members 28, 30 there is located an extension spring 36 with its opposite ends 36a, 36b each fixed to a closing half-member 28, 30 and arranged on the upstream side of each half-member with reference to the flow of the hydromassage jet indicated by the arrows A in Figure 2. A lug 38 on which the rotational spring 36 rests is always provided on the said upstream side, in such a way that the spring is arranged at a suitable distance from the rotational pivot of the two half-members.

Inside the duct 14, a radial and annular abutment surface is formed along the transverse plane passing through the axis 34, on which the semi-circular edges of the closing half-members 28, 30 rest when the device is in the closed position illustrated in Figure 1.

So as to ensure good water-tightness in the region of the annular abutment shoulder 40, the latter is provided with a seal 42.

Operation of the device is as follows:
When there is no hydromassage jet, the closing half-members 28, 30 on account of the resilient action exerted by the extension spring 36 are arranged transversely with respect to the duct 14, closing it as illustrated in Figure 1. In this position the semi-circular edges of both the closing half-members 28, 30 rest against the seal 42 located along the annular abutment surface 40. In this way, with hydromassage completely deactivated, the water contained in the bath tube is prevented from entering the nozzle and hence the pipes of the hydromassage system.

When hydromassage is started, the flow of the hydromassage jet, indicated by the arrows A in Figure 2, exerts a pressure against the closing half-members 28, 30 such that it overcomes the resilient reaction of the extension spring 36 with the result that the members themselves, rotating about their pivot, are arranged along the longitudinal axis of the duct 14, being positioned on top of one another on the side directed downstream with respect to the pivot pin, as illustrated in Figure 2.

The hydromassage jet is thus able to flow out of the nozzle duct without encountering practically any obstacles. It should be noted moreover that, owing to the special configuration of the valve device, between the closing half-members and duct, there are no interstices or constrictions and therefore no contaminating substances are deposited, thereby reducing considerably the need to perform period and constant cleaning of the nozzle.

It is clearly understood that operationally and mechanically equivalent modifications and variations are possible and may be envisaged, while remaining within the protective scope of the present invention. For example, instead of using a spring it is possible to envisage the use of two springs each having one end fixed to one of the closing half-members and the other end fixed in the vicinity of the pivot pin of the closing half-members. Alternatively, instead of a sealing gasket arranged between the closing half-members and duct, it is possible to line the sealing half-members with resilient material such as rubber for example.

Similarly the closing member, instead of being divided up into two half-members may be a single element pivotably hinged on the internal surface of the duct, provided, obviously, that the duct has a suitable cross-section.

## Claims

1. Valve device for nozzles used for hydrosanitary purposes, in particular for the nozzles of hydromassage baths, comprising at least one closing member (28, 30) housed inside the duct (14) of the nozzle (10) and at least one resilient element (36) located between said at least one closing member (28, 30) and the duct (14) so as to define, when no hydromassage jet is flowing through, a first so-called closed position in which said at least one closing member (28, 30) closes the duct (14) of the nozzle (10) and also define, when there is a hydromassage jet flowing through, a second so-called open position in which said at least one closing member (28, 30) allows the jet itself to flow through, characterized in that said at least one closing member (28, 30) is positioned downstream, with reference to the direction of flow of the jet, of the diverging part of the Venturi section provided in the nozzle and is fixed rotatably with respect to the duct (14), so that in said first closed position it is arranged so as to intercept said flow and in said second open position it is arranged substantially parallel to the said direction of flow.

2. Device according to Claim 1, characterized in that said duct (14) has a circular cross-section and the closing member consists of two halves (28, 30) of essentially semi-circular shape corresponding substantially to half of the cross-section of the duct (14) and fixed rotatably along their diameter in correspondence with a transverse axis (34) of the duct (14).

3. Device according to Claim 2, characterized in that said resilient element (36) is an extension spring having its opposite ends fixed to each closing half-member (28, 30) and being arranged upstream with respect to the closing half-members (28, 30) with reference to the direction of flow of the hydromassage jet, in said first closed position the closing half-members (28, 30) being arranged transversely with respect to the longitudinal axis of the duct (14) and on the opposite side with respect to their fixed side and in said second open position the two closing half-members (28, 30) being arranged along the longitudinal axis of the duct (14), located on top of one another and directed downstream with reference to the direction of flow of the hydromassage jet.

4. Device according to Claim 3, characterized in that in said first closed position the edges of the two closing half-members which are not fixed rest against a radial abutment surface (40) of the duct (14).

5. Device according to Claim 4, characterized in that at least one sealing element (42) is located between the radial abutment surface (40) and the edges of the closing half-members (28, 30) which are not fixed.

6. Device according to Claim 5, characterized in that said at least one sealing element is a seal (42) applied along the radial abutment surface (40).

7. Device according to any one of Claims 3 to 6, characterized in that said extension spring (36) is longitudinally arranged at a distance from the fixed sides of the closing half-members (28, 30) in an upstream direction with reference to the direction of flow of the hydromassage jet.

8. Device according to Claim 7, characterized in that said extension spring rests on a lug (38) located in the vicinity of the fixed sides of the closing half-members (28, 30) so as to be arranged longitudinally at a distance in the upstream direction.

9. Device according to Claim 1, characterized in that said duct has a square or rectangular cross-section and said closing member has a cross-section substantially corresponding to the cross-section of the duct and is fixed rotatably along one of its sides to a corresponding side of the duct cross-section, said resilient element being a spring having its opposite ends fixed to the closing member on the side directed upstream with reference to the direction of flow of the hydromassage jet and to the internal surface of the duct at a point which is displaced upstream with respect to the fixed side of the closing member.
